# EUROPEAN PATENT APPLICATION

(11) **EP 4 564 208 A1**
(43) Date of publication of application: **04.06.2025**
(21) Application number: 23217491.2
(22) Date of filing: 18.12.2023
(51) Int. Cl.: G06F 21/57, G06Q 30/015, H04L 9/40

(54) **METHODS TO SCORE AND CHARGE FOR SERVICE REQUESTS GENERATED BY THIRD PARTY NETWORK MONITORING TOOLS**

(30) Priority: 29.11.2023 US 202363603766 P
(71) Applicant: Koninklijke Philips N.V., 5656 AG Eindhoven (NL)
(72) Inventor: KOSTER, Robert Paul, Eindhoven (NL); BHATTACHARYA, Sauvik, Eindhoven (NL)
(74) Representative: Philips Intellectual Property & Standards

(57) **Abstract**

A non-transitory computer readable medium (**16**) stores instructions readable and executable by at least one electronic processor (**14**) to perform a method of reducing a burden of false positive information technology (IT) vulnerability alerts on a servicing handling system (**1**). The method includes identifying a service request (**11**) received by the service handling system as a monitoring tool-sourced IT vulnerability alert for a medical device (**10**) that is generated by an IT vulnerability monitoring tool operating to monitor an IT network to which the medical device is connected; implementing a remediation process for the monitoring tool-sourced vulnerability alert; repeating the identifying and implementing to accumulate statistics on monitoring tool-sourced vulnerability alerts; and outputting an indication (**26**) if the statistics indicate the monitoring tool-sourced vulnerability alerts are imposing an unacceptable burden on the service handling system.

## Description

### FIELD OF THE INVENTION

The following relates generally to the medical device maintenance arts, medical device security arts, and related arts.

### BACKGROUND OF THE INVENTION

Many medical devices are computerized. Some examples include medical imaging devices such as magnetic resonance imaging (MRI) scanners, computed tomography (CT) scanners, positron emission tomography (PET) scanners, ultrasound imaging systems, and so forth; image-guided therapy (IGT) systems employing such medical imaging devices; patient monitors, mechanical respirators, and so forth. A computerized medical device should employ appropriate data security measures for numerous reasons, such as to protect sensitive patient medical data acquired or processed by the medical device, to ensure unauthorized personnel do not operate (or interfere with the operation of) the medical device, to ensure the integrity and safe operation of the medical device, and to ensure the medical device does not provide an entry point for unauthorized access to a hospital electronic data network to which the medical device is connected.

Computerized medical devices such as medical imaging devices are connected with the hospital electronic network. As such, cybersecurity considerations apply to medical devices, both to protect the medical devices from attack and to prevent the medical devices from serving as access points for a cyberattack. Medical devices are also often highly configurable with different software packages being deployed to provide different combinations of functionality, and hence the vulnerabilities to cyberattacks can be installation dependent. Software packages for medical devices may include medical task-specific software developed in-house or purchased by the vendor, and also usually include general-purpose software such as operating system (OS) software, device firmware loaded onto general-purpose peripherals or other devices, device drivers, and so forth. The general-purpose software may be stripped down by removing modules or components that are unrelated to operation of the medical device. Each piece of software in the overall software package of a medical device can potentially introduce cyberattack vulnerabilities, and in some cases whether a vulnerability is present and exploitable may depend on the combination of software that makes up the overall software package, or whether a certain optional component is included.

Medical device vendors are vigilant to patch any vulnerabilities that may be identified. Maintaining cybersecurity is an ongoing process, as new vulnerabilities are identified, and security packages published. The vendor typically pushes these patches to customers via the Internet, possibly via an intervening hospital information technology (IT) network or other Internet-connected local IT infrastructure.

Vendors also endeavor to provide customer-friendly issue reporting pathways for a customer to request assistance with a medical device, such as by maintaining a call center that customers may call to report issues with medical devices, or a website or dedicated software with application programming interface (API) for reporting issues. While primarily intended for customers to report operational issues such as medical device malfunctions or unsatisfactory performance, it has been found that customers also utilize these request pathways to report software vulnerabilities and request remediation of such vulnerabilities. This is not necessarily a problem - indeed, a customer may identify a vulnerability before the medical device vendor, especially if the vulnerability pertains to general-purpose software purchased by the vendor. In such cases, the customer may in some instances be notified of a vulnerability before the vendor.

Given the plethora of software and the myriad potential vulnerabilities, public and private databases of vulnerabilities are now maintained. For example, the Common Vulnerabilities and Exposures (CVE) is a publicly accessible database of cybersecurity vulnerabilities. Numerous companies now provide passive network scanning products that run in the background. These passive scanners (also referred to herein as monitoring tools) collect information about software running on the electronic network (e.g., a hospital network) and constantly check the software against vulnerability databases to automatically detect potential vulnerabilities. This is often handled by the information technology (IT) department of a hospital, whose personnel may have limited familiarity with the software packages of medical devices. When IT personnel are notified by the passive scanner of a potential vulnerability in software of a medical device, this may be reported to the medical device vendor via the provided issue reporting pathway, with expectation that the vendor will quickly respond with a suitable security patch or other resolution.

However, passive scanners can output a high rate of false positives, that is, reports of vulnerabilities that do not actually exist in the specific instance of the software that is scanned. This can be a consequence of limited information gathered by the passive scanning, overinclusive reporting, or so forth. For example, the passive scanner may identify that a medical device is using an OS version 2.1 (as an example), and the database indicates OS version 2.1 has a cybersecurity vulnerability. The passive scanner reports this vulnerability, and hospital IT staff may then submit a remediation request to the vendor to remediate this vulnerability. However, the medical device may actually be using a stripped-down implementation of OS version 2.1 with limited functionality sufficient for running the medical device, and the reported vulnerability may not actually be present or exploitable in the stripped-down implementation of OS version 2.1 running on the medical device. In another scenario, the passive scanner may be configured to automatically submit the remediation request directly to the medical device vendor without knowledge or action by hospital IT staff. Again, this can result in a high rate of incorrect and unnecessary remediation requests being submitted to the vendor due to the high rate of false positives generated by the passive scanner.

It has been found that high rates of false positive vulnerability remediation requests would be submitted to medical device vendors by hospitals utilizing passive scanners. These high rates of false positives can be burdensome to service personnel of the vendor and can take time away from resolving actual issues with medical devices. Yet, the vendor cannot ignore vulnerability remediation requests since doing so can create customer dissatisfaction and could result in missing an actual vulnerability.

The following discloses certain improvements to overcome these problems and others.

### SUMMARY OF THE INVENTION

In one aspect, a service handling system includes a customer interface via which service requests pertaining to medical devices are received from customers. A servicing information technology (IT) system is configured to dispatch the service requests to service personnel and to track resolution of the service requests. An electronic processor is programmed to perform a method for policing service requests relating to IT vulnerability alerts including identifying service requests which are monitoring tool-sourced IT vulnerability alerts, wherein the service request comprises a report of an IT vulnerability of a medical device that is received by the customer interface and that originates from an IT vulnerability monitoring tool operating to monitor an IT network to which the medical device is connected; calculating a burden on the service handling system of the monitoring tool-sourced IT vulnerability alerts; and in response to the burden on the service handling system of the monitoring tool-sourced IT vulnerability alerts received from a given customer satisfying an excessive burden criterion, performing a remedial action.

In another aspect, a non-transitory computer readable medium stores instructions readable and executable by at least one electronic processor to perform a method of reducing a burden of false positive IT vulnerability alerts on a servicing handling system. The method includes identifying a service request received by the service handling system as a monitoring tool-sourced IT vulnerability alert for a medical device that is generated by an IT vulnerability monitoring tool operating to monitor an IT network to which the medical device is connected; implementing a remediation process for the monitoring tool-sourced vulnerability alert; repeating the identifying and implementing to accumulate statistics on monitoring tool-sourced vulnerability alerts; and outputting an indication if the statistics indicate the monitoring tool-sourced vulnerability alerts are imposing an unacceptable burden on the service handling system.

In another aspect, a service handling system includes a customer interface via which service requests pertaining to medical devices are received from customers. A servicing IT system is configured to dispatch the service requests to service personnel and to track resolution of the service requests. An electronic processor is programmed to perform a method for policing service requests relating to IT vulnerability alerts including identifying service requests which are monitoring tool-sourced IT vulnerability alerts, wherein a service request comprises a report of an IT vulnerability of a medical device that is received by the customer interface and that originates from an IT vulnerability monitoring tool operating to monitor an IT network to which the medical device is connected; classifying the respective monitoring tool-sourced IT vulnerability alerts as true positives or false positives based on service request resolution information retrieved from the servicing IT system; calculating, on a per-customer basis, a burden on the service handling system of the monitoring tool-sourced IT vulnerability alerts that are classified as false positives; and in response to the burden on the service handling system of the monitoring tool-sourced IT vulnerability alerts received from a given customer and classified as false positives satisfying an excessive burden criterion, performing a remedial action including at least contacting the given customer about the monitoring tool-sourced IT vulnerability alerts received from the given customer that are classified as false positives.

One advantage resides in reducing false positives for remediation requests being sent to vendors from passive network scanners (i.e., monitoring tools).

Another advantage resides in providing a quantitation of the burden being placed on the vendor by the false positive vulnerability remediation requests.

Another advantage resides in providing warnings to customers who produce a large number of false positive remediation requests.

A given embodiment may provide none, one, two, more, or all of the foregoing advantages, and/or may provide other advantages as will become apparent to one of ordinary skill in the art upon reading and understanding the present disclosure.

### BRIEF DESCRIPTION OF THE DRAWINGS

The disclosure may take form in various components and arrangements of components, and in various steps and arrangements of steps. The drawings are only for purposes of illustrating the preferred embodiments and are not to be construed as limiting the disclosure.

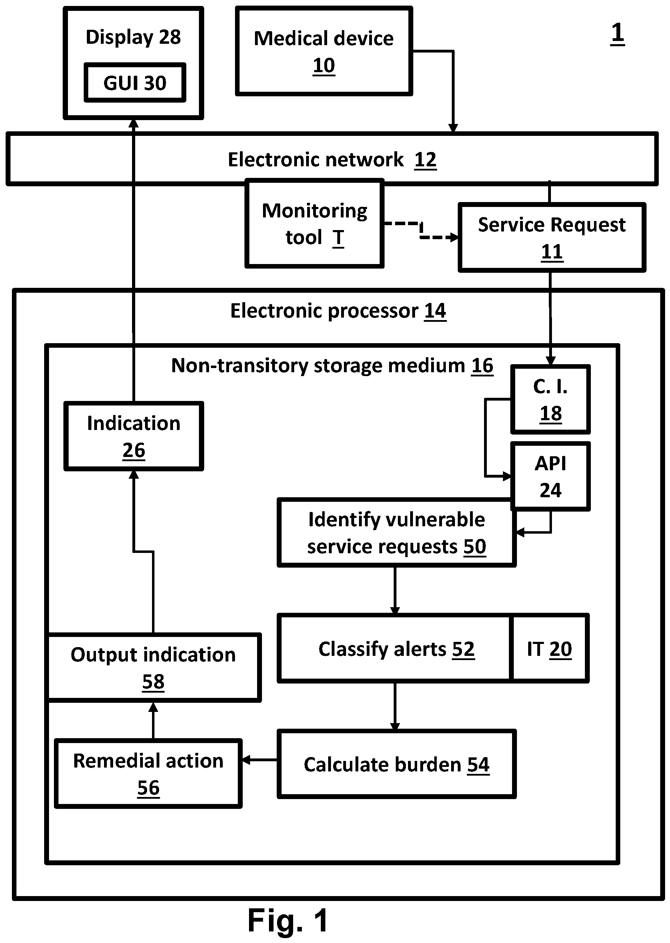

Fig. 1 diagrammatically shows an illustrative service handling system in accordance with the present disclosure.

### DETAILED DESCRIPTION OF EMBODIMENTS

The following discloses an approach for reducing the adverse impact of false positive vulnerability remediation requests submitted by passive scanners.

In a first step, vulnerability remediation requests generated by passive scanners are identified when they are received at the vendor. If the vulnerability remediation request is submitted directly by the passive scanner, then the API of the passive scanner may be identified to recognize the request as coming from the passive scanner. If the vulnerability remediation request is submitted by hospital IT staff, then analysis of the request can be performed to detect language indicating that it was sourced by a passive scanner. This is feasible because the passive scanner will typically report vulnerabilities using distinctive language such as template language, or inclusion of specific information such as MAC addresses, IP addresses, numerical device identifiers, or so forth that human IT staff would be unlikely to include.

Once vulnerability remediation requests are flagged as generated by a passive scanner, they are initially handled as usual. This may involve service personnel reviewing the vulnerability remediation requests, or automated remediation algorithms may be applied. As each vulnerability remediation request is closed, the request is classified as either a true positive (an actual vulnerability) or a false positive (a reported vulnerability that was not actually present). Key performance indicator (KPI) statistics are generated and continually updated, such as the total number of false positive vulnerability remediation requests generated by the passive scanner, the fraction of vulnerability remediation requests generated by the passive scanner that were false positives, or so forth. This is done on a per-customer basis.

If the KPI(s) for a given customer meet an unacceptable burden criterion indicating the false positive vulnerability remediation requests from the passive scanner of that customer are placing an undue burden on the medical device vendor, then a warning is issued to the customer to this effect. Additional remediation may also be taken, such as no longer accepting vulnerability remediation requests from the passive scanner of that customer, or assessing a penalty fee for any future vulnerability remediation requests from the passive scanner of that customer that are determined to be false positives.

Advantageously, the disclosed approach provides a quantitation of the burden being placed on the vendor by the false positive vulnerability remediation requests issued by the passive scanner of the customer. This information is preferably included in the warning that is issued to the customer. This can encourage the customer to reassess whether to continue to use the passive scanner, or to at least reconfigure the passive scanner (e.g., by preventing it from automatically sending vulnerability remediation requests directly to the vendor). If a penalty fee is assessed, this burden quantitation information justifies that fee.

With reference to Fig. 1, an illustrative service handling system **1** monitoring one or more medical devices **10** being monitored is diagrammatically shown. By way of some non-limiting illustrative examples, the medical device **10** being monitored may be a medical imaging device such as a magnetic resonance imaging (MRI) scanner, a computed tomography (CT) scanner, a positron emission tomography (PET) scanner, a gamma camera for performing single photon emission computed tomography (SPECT), an interventional radiology (IR) device, or so forth; or may be another type of medical device such as an image guided therapy (IGT) system, a mechanical ventilator, a multifunction patient monitor, a radiation therapy device, or so forth. The medical device **10** is computerized and may be connected to an electronic network. As shown in Fig. 1, the medical device **10** is connected with an electronic network **12** (e.g., a hospital IT network, radiology department IT network, or the like). It will be appreciated that the electronic network **12** typically has many other medical devices, and potentially other types of devices, connected therewith. For example, the electronic network **12** may be a hospital network that interconnects personal computers used by hospital personnel, various types of medical devices including the illustrative medical device **10,** cellular telephones or other mobile devices of hospital personnel, and/or so forth. As is recognized in the IT field, these various connected devices in general may present cybersecurity risks. Hence, a third-party monitoring tool **T** (also referred to herein as a monitoring tool **T,** network monitoring tool **T,** or similar nomenclature) is deployed, which monitors the electronic network **12** to automatically detect cybersecurity risks presented by various devices connected with the network **12.** For example, the network monitoring tool **T** may be a passive scanner that detects various software running on medical devices (including illustrative medical device **10**), computers, mobile devices, and/or other electronic devices, and compares the detected software with one or more databases of vulnerabilities (not shown), such as the Common Vulnerabilities and Exposures (CVE) database as one nonlimiting illustrative example. In some embodiments, the monitoring tool **T** compares detected software running on electronic devices connected with the IT network **12** against the vulnerabilities database, and flags any detected software that matches an entry in the vulnerabilities database as a cybersecurity threat.

The amount of analysis the monitoring tool **T** actually performs in determining a cybersecurity threat may be limited, typically due to limited information about the software that the monitoring tool **T** can detect, and/or due to limited information on the cybersecurity vulnerability contained in the vulnerabilities database. For example, the monitoring tool **T** may detect the version number of the detected software and check this against the version number of the software listed in the vulnerabilities database. However, the monitoring tool **T** may not be able to determine whether the instance of the software running on the electronic device connected with the network **12** includes the specific module, sub-version number, or other more granular information which would enable the cybersecurity threat to be confirmed or ruled out. As another example, the monitoring tool may be unable to determine whether the instance of the software running on the electronic device has already received a security update that addresses and eliminates the cybersecurity threat. Because of these limitations, the monitoring tool **T** may produce a high rate of false positives, in which the monitoring tool **T** flags detected software as presenting a cybersecurity threat that the actually installed instance of the software does not actually present. It should also be noted that while Fig. 1 illustrates a single monitoring tool **T,** it is possible the electronic network **12** could be monitored by two or more different monitoring tools, further increasing the rate of false positives generated.

As further shown in Fig. 1, an electronic processor **14** is hosted by the vendor of the medical device **10.** The electronic processor **14** includes or is operatively connected with a non-transitory storage medium **16** storing instructions readable and executable by the electronic processor **14** to implement one or more processing modules. Note that the medical device **10** may comprise multiple components: for example, a magnetic resonance (MR) imaging device may include the MR scanner (including the main magnet, gradient coils, radio frequency coils, and so forth) located in the magnet room and an MR scanner controller comprising the electronic processor **14** which is located in a separate, adjacent control room. In this example, the medical device **10** is considered to include both the MR scanner and the MR scanner controller. As another example, the medical device **10** could be an image guided therapy (IGT) system including a medical imaging device and hardware for performing an intravascular procedure or other medical procedure under guidance of the medical imaging device.

The hospital (or other customer utilizing the medical device **10** and network **12**) sends service requests **11** reporting known or suspected issues with the medical device **10** to the electronic processor **14** hosted by the vendor of the medical device **10.** The service requests **11** may be generated in various ways. For example, service requests may be generated manually by hospital personnel, and/or automatically by the monitoring tool **T.** The service requests **11** typically relate to observed operational problems with the medical device **10,** such as poor image quality in the case of a medical imaging device, connectivity issues with a patient monitor, leaks in a mechanical ventilator, or so forth. However, some service requests **11** may be reporting suspected cybersecurity issues. These service request may be generated manually based on reports of cybersecurity issues from the monitoring tool **T,** or in some configurations may be automatically generated by the monitoring tool **T** itself (diagrammatically indicated by a dashed arrow from the monitoring tool **T** to the service request **11**). In the former case, the human service request submitter may typically copy-and-paste text of the cybersecurity threat description generated by the monitoring tool **T** into the manually generated service request.

As shown in Fig. 1, the service requests **11** are transferred or uploaded to a customer interface **18** of the electronic processor **14** of the vendor. The service request **11** may be received at the customer interface **18** via the Internet (in embodiments in which the customer interface **18** comprises a website or API) or may be a telephonic or text message service request or the like. Note that Fig. 1 does not show the Internet, telephone connection, or other pathway via which the service request **11** is received. A servicing information technology (IT) system **20** is configured to dispatch the service requests **11** to service personnel and to track resolution of the service requests **11.**

The electronic processor **14** is programmed to perform a method for policing service requests **11** relating to IT vulnerability alerts using the modules implemented by the electronic processor **14** and stored in the non-transitory storage medium **16.** To do so, an identifying module **50** is configured to identify service requests **11** which are monitoring tool-sourced IT vulnerability alerts. Each service request **11** comprises a report of an IT vulnerability of the medical device **10** that is received by the customer interface **18** and that originates from the IT vulnerability monitoring tool **T** operating to monitor the electronic IT network **12** to which the medical device **10** is connected. In one embodiment, the identifying module **50** is programmed to identify service requests **11** as monitoring tool-sourced IT vulnerability alerts which are received directly from a monitoring tool **T** based on a detected application programming interface (API) **24** of the monitoring tool **T.** The monitoring tool **T** is implemented in the identifying module **50** and the API **24** of the monitoring tool **T** is in communication with the customer interface **18** to receive the service requests **11.** In other words, the monitoring tool-sourced IT vulnerability alert generated for the medical device **11** is generated directly by a user input provided by an employee at a medical facility where the medical device is located.

In another embodiment, the identifying module **50** is programmed to identify service requests **11** as monitoring tool-sourced IT vulnerability alerts based on analysis of text of the service requests **11** (e.g., matching of characteristic keywords). In other words, the monitoring tool-sourced IT vulnerability alert generated for the medical device **11** is generated directly by the medical device **10.**

A classifier module **52** is programmed to classify the respective monitoring tool-sourced IT vulnerability alerts as true positives or false positives based on service request resolution information retrieved from the servicing IT system **20.** To do so, the classifier module 52 is programmed to identify a monitoring tool-sourced IT vulnerability alert as false positive if the service request **11** is closed without remedial action being taken (i.e., a service action to remediate the alert) and as true positive if the service request **11** is closed after taking a service action to remediate the alert.

A calculator module **54** is programmed to calculate a burden on the service handling system **1** of the monitoring tool-sourced IT vulnerability alerts. For example, the burden is calculated on a per-customer basis based on a number or rate of monitoring tool-sourced IT vulnerability alerts received from respective customers that are classified as false positives and/or a fraction of monitoring tool-sourced IT vulnerability alerts received from respective customers that are classified as false positives.

To calculate the burden, the calculator module **54** is programmed to implement a remediation process for the monitoring tool-sourced vulnerability alert. The identifying of the service requests **11** as monitoring tool-sourced IT vulnerability alerts and the remediation processes are repeated to accumulate statistics on monitoring tool-sourced vulnerability alerts. In one example, the remediation process can include receiving an input from service personnel indicative of a review of the monitoring tool-sourced IT vulnerability alert. In another example, the remediation process can include applying an automated remediation process to implement the monitoring tool-sourced IT vulnerability alert.

In some embodiments, the calculator module **54** is programmed to determine whether the monitoring tool-sourced vulnerability alert satisfies a predetermined false positive criterion. This determination, along with the identifying of the service requests **11** as monitoring tool-sourced IT vulnerability alerts and the remediation processes are repeated to further accumulate the statistics on monitoring tool-sourced vulnerability alerts. To perform this determination, the calculator module **54** is programmed to generate key performance indicator (KPI) statistics indicative of a likelihood of the monitoring tool-sourced IT vulnerability alert satisfying the predetermined false positive criterion. For example, the calculator module **54** is programmed to generate a total number of false positive monitoring tool-sourced IT vulnerability alerts. In another example, the calculator module **54** is programmed to generate a fraction of monitoring tool-sourced IT vulnerability alerts compared to a total number of monitoring tool-sourced IT vulnerability alerts. The calculator module **54** is programmed to determine whether the KPIs exceed the predetermined false positive criterion.

A remediation module **56** is programmed to perform a remedial action in response to the burden on the service handling system of the monitoring tool-sourced IT vulnerability alerts received from a given customer satisfying an excessive burden criterion. As used herein, the term "remedial action" refers to an action to remediate unnecessary high burden service requests. In some examples, the remedial action includes at least contacting the given customer about the monitoring tool-sourced IT vulnerability alerts received from the given customer that are classified as false positives. In another example, the remedial action further includes assessing a fee for the monitoring tool-sourced IT vulnerability alerts received from the given customer. In a further example, the remedial action further includes stopping acceptance of monitoring tool-sourced IT vulnerability alerts received from the given customer.

In some embodiments, the calculator module **54** is programmed to track a number of service requests which are determined to be false positives, and the remediation module **56** is programmed to generate a root cause of the false positives. Here, the root cause is the root cause of the false positives (since, as false positives, there is no actual cybersecurity vulnerability to remediate). For example, consider a situation in which a number of service requests are received which indicate the operating system (OS) of the medical device presents a cybersecurity vulnerability; but, for the first one or few such service requests it is determined that these are false positives because they assume the presence of a flawed component of the OS that introduces the cybersecurity vulnerability - but that flawed OS component is not actually installed on the medical devices. (As a specific example, the flawed OS component might be a certain wireless communication component that is typically included with the commercial OS, but is not installed on the medical devices). In this example, the root cause is reporting that the installed OS presents a cybersecurity vulnerability for the medical device, without determining whether the OS as installed on the medical device actually includes the flawed OS component. In one approach, these initial service requests with the same root cause are collected, and a suitable prepared response for these false positives associated with the root cause is generated. Going forward, future service requests relating to the OS can be triaged by automatically checking whether the flawed OS component is installed on the medical device, and if not, the prepared response is immediately sent to the customer and the service request is closed. This directly improves the efficiency of the service handling system by removing these service requests from the servicing queue. Optionally, the prepared message (or a variant thereof) may also be sent to the maintainer of the third-party monitoring tool **T** requesting that the tool **T** be updated to check whether the flawed OS component is actually installed before flagging an alleged cybersecurity vulnerability, so as to avoid having the tool **T** issue these false positive service requests in the future.

An output module **58** is programmed to output indications **26** related to the burden and/or the remedial action. For example, the output module **58** is programmed to output an indication or warning **26** if the statistics indicate the monitoring tool-sourced vulnerability alerts are imposing an unacceptable burden on the service handling system **1.** The output module **58** communicates the indication or warning **26** to the customer of the medical device **10** via a display device **28** presenting a graphical user interface (GU) **30** on which the indication or warning **26** is displayed.

Depending on who the targeted customer contact is, the display device **28** could be the contact's work computer, cellphone, or other device on which the contact reads his or her email, text messages, or other communications, by way of nonlimiting illustrative example. The advertisement **26** can be transmitted using a communication channel such as e-mail, or an intermediate means such as the medical device **10** or a web portal used by the targeted customer contact. In another example, the display device **28** could be the electronic controller of the medical device **10** itself, and the indication or warning **26** is displayed to the targeted customer contact when he or she logs onto the medical device **10.**

### EXAMPLE

Automated alerts from passive network scanners (i.e., monitoring tools) are subject to many false positives or come with incomplete or incorrect information, which causes a severe burden on medical device vendors if customers share alerts without further curation. Hence, these monitoring tools operate opportunistically while pushing cost down the value stream via healthcare delivery organizations to medical device manufacturers (i.e., vendors).

The service handling system **1** overcomes this disadvantage by identifying the situation and avoiding or compensating for the negative consequences. For example, a charge for service requests originating from automated tools or deprioritize their handling.

The service handling system **1** is configured to 1) identify the origin of a service call (i.e., a customer complaint or inquiry, particularly if the origin is a third party automated monitoring tool), 2) track KPIs for the identified tool and customer (e.g. cumulative effort spent or false positive ratio), and 3) use tool usage and KPIs as input for follow-up actions (e.g. service request prioritization, charging the customer or customer communication).

The identifying module **50** is programmed to identify whether an origin of customer service call/query/complaint is an automated tool. The identifying module **50** is programmed to attempt to identify the tool (e.g., a third-party security solution, also referred to herein as a network monitoring tool, or simply a monitoring tool). The implementations can be based on, for example, determining if a dedicated API for one or more specific tools is used, check if service staff registered customer tool usage, or machine learning identifies tools from service case data and description. This would leverage common structures and patterns of tool output that appear in case data.

The classifier module **52** is programmed to track a correctness of an alert, which can be performed manually, automated, or assisted. In a manual embodiment, the classifier module **52** is programmed to track the correctness of the alert as part of customer service request handling track correctness of alert (by service staff and business unit SME). Example: was action necessary, had inquiry merit or not. In an automated embodiment, the classifier module **52** is programmed to track the correctness of the alert by correlating with own vendor-collected device data (either via structured device connections or manual extraction), with subsequent (absence of) service actions in service records, etc. The vendor collected data can include device logs and configuration containing, identifiers (e.g., device serial number or MAC address), security relevant data (e.g., software version, installed patches, security risk analysis). In an assisted embodiment, the classifier module **52** is programmed to track the correctness of the alert by a combination of automated and manual embodiments.

The calculator module **54** is programmed to calculate and update the KPI metrics. To do so, the calculator module **54** is programmed to calculate tool quality/reputation and determine KPI metrics, e.g., false positive rate, true positive rate, etc. The KPI metrics are indicative of the quality of a third-party monitoring tool. Therefore, requests originating from third party monitoring tools and their correctness are counted, and statistics calculated. Additionally, specific discounts may be applied for requests with incorrect or incomplete information, e.g., incorrect device identification, which cause unnecessary spending of time. The calculator module **54** is programmed to calculate and update the KPI metrics to quantify and calculate unwarranted burden from customer on vendor, e.g., build up credit per device per month of contract, deduct false alerts from credit, add true positives to credit, and so forth. This enables customers to use third party monitoring tools in a way that fits their service plan, e.g., with a standard service plan curate alerts carefully before opening a service call, or obtain a service plan allowing a larger budget for handling service calls originating from third party monitoring tools. The calculator module **54** is programmed to inform a customer on a tool performance and (side) effects, an overview of alerts generated by monitoring tool(s) running on the customer's IT network consumed in the past time period, appropriately categorized (e.g., correct vs. false alerts), a remaining budget, implications of budget getting exhausted (both on customer and the medical device vendor), and options when running out of budget for these kinds of alerts (stopping, pay service fee, keep rate low), and so forth.

In a specific example, a hospital with medical devices introduces a network vulnerability monitoring tool. The tool passively observes the hospital network(s) to detect devices on the network and attempt to identify the devices, e.g., brand, type, model, (software) version.

The service handling system **1** subsequently uses its algorithms and database to determine vulnerabilities and risks. Vulnerability data may be sourced from medical device manufacturer security advisories, CVE databases, etc., and relate both to the medical device as a whole or its software parts, e.g., Windows operating system. Alerts are created from the identified vulnerabilities and risks and shared with the hospital, e.g., hospital IT or security officer.

Alarmed by the alerts, the hospital reaches out to the manufacturers of the affected medical devices. It creates a case (i.e., service request) in the online service portal of the manufacturer and copy-pastes one alert that it exported from the monitoring tool.

The service IT system of the manufacturer processes incoming service requests. The third-party tool-detector component attempts to identify the origin of the alert. It determines with high probability that the alert originates from a third-party security (i.e., monitoring) tool. The artificial intelligence powering the third party-tool-detector triggers on the third-party monitoring tool name mentioned in the message and on the structure of the alerts included in the message. The structure can belong to a specific tool or follow a generic pattern common for these type of tools, e.g., identifiers for MAC addresses, IP addresses, device identifier, software version, CVE identifier complemented with text fields. In an alternative embodiment, the detector also identifies the number of alerts referenced in the service case. Together this results in the following output of this step: origin determined as automated tool, name of the third-party monitoring tool, and number of alerts.

The output of the previous step in combination with KPI metrics from earlier service cases determines the follow-up of the service request. With no prior cases from this hospital originating from automated tools and just one alert, the service request is taken into consideration.

Service staff identifies the medical system and analyses the alert. For example, it is found that the vulnerability in the operating system from the alert cannot be exploited due to the design of the medical device, because affected functions are not enabled. Consequently, the alert is a false positive, which is recorded by the service IT system to track (in)correctness (in this case manually similarly to step 2 of the method).

The service IT system subsequently updates the KPI metrics. It increases the number of alerts for the identified third-party monitoring tool and the number of false positives. It updates the related ratios as KPI metrics. It also sets the number of third-party monitoring tool-generated service requests and false positives from said third party monitoring tools for the customer to one.

In the final step the customer is informed. Via the service IT system, a message is communicated to the customer. This message answers the question regarding the alert, in this case that the system is not vulnerable and the alert a false positive. The message further includes information on service requests that involve alerts from automated third party monitoring tools together with a reference to above false positive and service plans.

In a follow-up scenario, the hospital has fully deployed the network vulnerability monitoring tool of the first embodiment. This time it creates a service request with all alerts affecting medical devices from the manufacturer.

The service IT system again identifies the origin being the automated third-party monitoring tool, determines the name of the third-party monitoring tool, and the number of alerts generated by that third party monitoring tool.

The output of the previous step in combination with KPI metrics from earlier service cases determines the follow-up of the service request. With a prior case originating from automated tools, a sizeable number of alerts in this case, and no positive budget or applicable service plan, the service request will not be considered and is rejected. Tracking correctness of an alert is not applicable in this embodiment and skipped.

The service IT system updates the KPI metrics with above number of requested and rejected alerts. The customer is informed via the service IT system that his service request cannot be considered together with proper fact-based justification (computed using the collected KPI metrics) and applicable background information on tools and options for service plans.

A non-transitory storage medium includes any medium for storing or transmitting information in a form readable by a machine (e.g., a computer). For instance, a machine-readable medium includes read only memory ("ROM"), solid state drive (SSD), flash memory, or other electronic storage medium; a hard disk drive, RAID array, or other magnetic disk storage media; an optical disk or other optical storage media; or so forth.

The methods illustrated throughout the specification, may be implemented as instructions stored on a non-transitory storage medium and read and executed by a computer or other electronic processor.

The disclosure has been described with reference to the preferred embodiments. Modifications and alterations may occur to others upon reading and understanding the preceding detailed description. It is intended that the exemplary embodiment be construed as including all such modifications and alterations insofar as they come within the scope of the appended claims or the equivalents thereof.

## Claims

1. A service handling system **(1),** comprising:
a customer interface **(12)** via which service requests **(11)** pertaining to medical devices (10) are received from customers;
a servicing information technology (IT) system **(20)** configured to dispatch the service requests to service personnel and to track resolution of the service requests; and
an electronic processor **(14)** programmed to perform a method **(100)** for policing service requests relating to IT vulnerability alerts, the method including:
identifying service requests which are monitoring tool-sourced IT vulnerability alerts, wherein the service request comprises a report of an IT vulnerability of a medical device that is received by the customer interface and that originates from an IT vulnerability monitoring tool operating to monitor an IT network to which the medical device is connected;
calculating a burden on the service handling system of the monitoring tool-sourced IT vulnerability alerts; and
in response to the burden on the service handling system of the monitoring tool-sourced IT vulnerability alerts received from a given customer satisfying an excessive burden criterion, performing a remedial action.

2. The service handling system **(1)** of claim 1, wherein the identifying of service requests **(11)** which are monitoring tool-sourced IT vulnerability alerts includes:
identifying service requests as monitoring tool-sourced IT vulnerability alerts which are received directly from a monitoring tool **(T)** based on a detected application programming interface (API) **(24)** of the monitoring tool.

3. The service handling system **(1)** of claim 1, wherein the identifying of service requests **(11)** as monitoring tool-sourced IT vulnerability alerts includes:
identifying service requests as monitoring tool-sourced IT vulnerability alerts based on analysis of text of the service requests.

4. The service handling system **(1)** of claim 1, wherein the method **(100)** further includes:
classifying the respective monitoring tool-sourced IT vulnerability alerts as true positives or false positives based on service request resolution information retrieved from the servicing IT system.

5. The service handling system **(1)** of claim 4, wherein the classifying of the respective monitoring tool-sourced IT vulnerability alerts as true positives or false positives includes:
identifying a monitoring tool-sourced IT vulnerability alert as false positive if the service request (1) is closed without a service action to remediate the alert being taken and as true positive if the service request is closed after taking a service action to remediate the alert.

6. The service handling system **(1)** of either one of claims 4 and 5, wherein the remedial action includes at least contacting the given customer about the monitoring tool-sourced IT vulnerability alerts received from the given customer that are classified as false positives.

7. The service handling system **(1)** of any one of claims 4-6, wherein the burden is calculated on a per-customer basis based on a number or rate of monitoring tool-sourced IT vulnerability alerts received from respective customers that are classified as false positives and/or a fraction of monitoring tool-sourced IT vulnerability alerts received from respective customers that are classified as false positives.

8. The service handling system **(1)** of any one of claims 1-7, wherein the remedial action further includes assessing a fee for the monitoring tool-sourced IT vulnerability alerts received from the given customer.

9. The service handling system **(1)** of claim 1, wherein the remedial action further includes stopping acceptance of monitoring tool-sourced IT vulnerability alerts received from the given customer.

10. The service handling system **(1)** of claim 1, wherein:
the calculating of the burden on the service handling system of the monitoring tool-sourced IT vulnerability alerts includes tracking a number of service requests that are determined to be false positives; and
determining one or more of the service requests that are determined to be false positives which have a common root cause of the false positives;
wherein the remedial action includes sending a prepared response to the service requests that are determined to be false positives having the common root cause and removing the service requests that are determined to be false positives having the common root cause from a servicing queue.

11. A non-transitory computer readable medium **(16)** storing instructions readable and executable by at least one electronic processor **(14)** to perform a method of reducing a burden of false positive information technology (IT) vulnerability alerts on a servicing handling system **(1),** the method comprising:
identifying a service request **(11)** received by the service handling system as a monitoring tool-sourced IT vulnerability alert for a medical device **(10)** that is generated by an IT vulnerability monitoring tool operating to monitor an IT network to which the medical device is connected;
implementing a remediation process for the monitoring tool-sourced vulnerability alert;
repeating the identifying and implementing to accumulate statistics on monitoring tool-sourced vulnerability alerts; and
outputting an indication **(26)** if the statistics indicate the monitoring tool-sourced vulnerability alerts are imposing an unacceptable burden on the service handling system.

12. The non-transitory computer readable medium **(16)** of claim 11, wherein the monitoring tool-sourced IT vulnerability alert generated for the medical device **(10)** is generated directly by the medical device.

13. The non-transitory computer readable medium **(16)** of either one of claims 10 and 11, wherein the implementing further includes:
receiving an input from service personnel indicative of a review of the monitoring tool-sourced IT vulnerability alert.

14. The non-transitory computer readable medium **(16)** of either one of claims 10 and 11, wherein the implementing further includes:
applying an automated remediation process to implement the remediation process for the monitoring tool-sourced IT vulnerability alert.

15. The non-transitory computer readable medium **(16)** of any one of claims 10-14, wherein the method further includes:
determining whether the monitoring tool-sourced vulnerability alert satisfies a predetermined false positive criterion;
repeating the identifying, implementing, and determining to accumulate statistics on monitoring tool-sourced vulnerability alerts satisfying the predetermined false positive criterion.
outputting an indication **(26)** if the statistics indicate the monitoring tool-sourced vulnerability alerts satisfying the predetermined false positive criterion are imposing an unacceptable burden on the service handling system.
